(19) Europäisches Patentamt
European Patent Office
Office européen des brevets

(11) EP 3 763 768 A1

(12) # EUROPÄISCHE PATENTANMELDUNG

(43) Veröffentlichungstag:
**13.01.2021 Patentblatt 2021/02**

(21) Anmeldenummer: **19186090.7**

(22) Anmeldetag: **12.07.2019**

(51) Int Cl.:
***C08G 65/26*** *(2006.01)* ***C08G 18/00*** *(2006.01)*
***C08G 64/18*** *(2006.01)* ***C08G 64/34*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder:
- **Mueller, Thomas Ernst**
  **44797 Bochum (DE)**
- **Guertler, Christoph**
  **50735 Köln (DE)**
- **Wohak, Matthias**
  **41540 Dormagen (DE)**
- **Hofmann, Joerg**
  **47800 Krefeld (DE)**
- **Subhani, Muhammad Afzal**
  **52072 Aachen (DE)**
- **Leitner, Walter**
  **52074 Aachen (DE)**

(74) Vertreter: **Levpat**
**c/o Covestro AG**
**Gebäude 4825**
**51365 Leverkusen (DE)**

(54) **POLYETHERCARBONATPOLYOLE MIT ENGER SEGMENTLÄNGENVERTEILUNG**

(57) Die vorliegende Erfindung betrifft Polyethercarbonatpolyol, dadurch gekennzeichnet, dass mindestens 75 Gew.-% der Polyethersegmente des Polyethercarbonatpolyols, bezogen auf das Gesamtgewicht der Polyethersegmente, aus 3 bis 5 Alkylenoxidbaueinheiten bestehen und die Standardabweichung $\sigma$ der Polyethersegmente im Polyethercarbonatpolyol 1,45 oder weniger beträgt.

EP 3 763 768 A1

## Beschreibung

Die vorliegende Erfindung betrifft Polyethercarbonatpolyole mit mindestens 75% Polyethersegmenten bestehend aus 3 bis 5 Alkylenoxidbaueinheiten und einer geringen Standardabweichung der Polyethersegmente. Weiterhin betrifft die Erfindung ein Verfahren zur Herstellung dieser Polyethercarbonatpolyole sowie die Verwendung von diesen Polyethercarbonatpolyolen.

Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z.B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkyaryl oder Aryl steht, der jeweils auch Heteroatome wie beispielsweise O, S, Si usw. enthalten kann, und wobei e und f für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat).

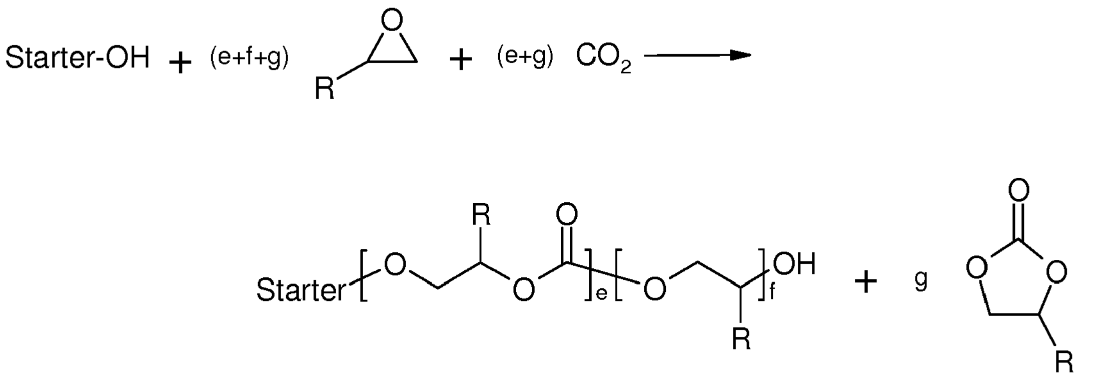

(I)

Aus dem Stand der Technik ist bekannt, dass bei der Kondensation von Propylenglykol mit Dimethylcarbonat unter Abspaltung von Methanol streng alternierende Polycarbonate entstehen (V. Pokharkar, S. Sivaram, Polymer, 36, 1995, 4851-4854). Der Aufbau dieser streng alternierenden Polycarbonate besteht aus Segmenten von Propylenglykoleinheiten die jeweils an zwei Carbonatgruppen gebunden sind. Solche streng alternierende Polycarbonate zeichnen sich durch eine relativ hohe Glasübergangstemperatur von 36-40°C aus und weisen eine hohe Viskosität auf.

WO 2015/032720 A1 offenbart ein Verfahren zur Herstellung von höherfunktionellen Polyethercarbonatpolyolen durch Umsetzung von mindestens zwei Alkylenoxiden und Kohlendioxid mit einer H-funktionellen Starterverbindung in Gegenwart eines Doppelmetallcyanid-Katalysators, wobei mindestens eines der eingesetzten Alkylenoxide eine Epoxyfunktionalität von 2 oder mehr aufweist. Die Beispiele in WO 2015/032720 A1 bei denen ein Alkylenoxid mit einer Epoxyfunktionalität von 2 oder mehr eingesetzt wurden, zeigen eine höhere Reaktivität (früherer Gelpunkt) als die Beispiele ohne Zugabe eines Alkylenoxids mit einer Epoxyfunktionalität von 2 oder mehr. Es gibt keine Angaben zur Struktur des Polyethercarbonatpolyols bezüglich der Länge des Polyethersegments oder der Standardabweichung.

Es war daher die Aufgabe der vorliegenden Erfindung, ein Polyethercarbonatpolyol mit einer guten Reaktivität und gleichzeitig niedriger Viskosität bereitzustellen.

Überraschend wurde gefunden, dass die technische Aufgabe gelöst wird durch ein Polyethercarbonatpolyol, dadurch gekennzeichnet, dass
mindestens 75 Gew.-% der Polyethersegmente des Polyethercarbonatpolyols, bezogen auf das Gesamtgewicht der Polyethersegmente, aus 3 bis 5 Alkylenoxidbaueinheiten bestehen und die Standardabweichung $\sigma$ der Polyethersegmente im Polyethercarbonatpolyol 1,45 oder weniger beträgt.

Bevorzugt werden die erfindungsgemäßen Polyethercarbonatpolyole durch die Anlagerung von Alkylenoxid und Kohlendioxid in Gegenwart eines DMC-Katalysators an eine H-funktionelle Startsubstanz ("Copolymerisation") hergestellt.

Beispielsweise werden die erfindungsgemäßen Polyethercarbonatpolyole durch ein Verfahren hergestellt, dadurch gekennzeichnet, dass

(a) die H-funktionelle Startersubstanz oder ein Gemisch aus mindestens zwei H-funktionellen Startersubstanzen

oder ein Suspensionsmittel vorgelegt und gegebenenfalls Wasser und/oder andere leicht flüchtige Verbindungen durch erhöhte Temperatur und/oder reduziertem Druck entfernt werden ("Trocknung"), wobei der Katalysator der H-funktionellen Startersubstanz oder dem Gemisch von mindestens zwei H-funktionellen Startersubstanzen oder dem Suspensionsmittel vor oder nach der Trocknung zugesetzt wird,

(β) gegebenenfalls zur Aktivierung des DMC-Katalysators eine Teilmenge (bezogen auf die Gesamtmenge der bei der Aktivierung und Copolymerisation eingesetzten Menge an Alkylenoxiden) von Alkylenoxid zu der aus Schritt (α) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,

(γ) Alkylenoxid, Kohlendioxid und gegebenenfalls eine H-funktionelle Startersubstanz zu der aus Schritt (β) resultierenden Mischung zugesetzt werden,

wobei wenigstens in einem der Schritte (α) oder (γ) mindestens eine H-funktionelle Startersubstanz zugesetzt wird.

Die gegebenenfalls eingesetzten Suspensionsmittel enthalten keine H-funktionellen Gruppen. Als Suspensionsmittel sind alle polar-aprotischen, schwach polar-aprotischen und unpolar-aprotischen Lösungsmittel geeignet, die jeweils keine H-funktionellen Gruppen enthalten. Als Suspensionsmittel kann auch eine Mischung aus zwei oder mehreren dieser Suspensionsmittel eingesetzt werden. Beispielhaft seien an dieser Stelle folgende polar-aprotischen Suspensionsmittel genannt: 4-Methyl-2-oxo-1,3-dioxolan (im Folgenden auch als cyclisches Propylencarbonat oder cPC bezeichnet), 1,3-Dioxolan-2-on (im Folgenden auch als cyclisches Ethylencarbonat oder cEC bezeichnet), Aceton, Methylethylketon, Acetonitril, Nitromethan, Dimethylsulfoxid, Sulfolan, Dimethylformamid, Dimethylacetamid und N-Methylpyrrolidon. Zu der Gruppe der unpolar- und schwach polar-aprotischen Suspensionsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B., Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

Allgemein können Alkylenoxide (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C1-C24-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyldimethoxysilan, 3-Glycidyl-oxypropyl-ethyldiethoxysilan, 3-Glycidyloxypropyltriisopropoxysilan. Vorzugsweise werden als Alkylenoxide 1-Butenoxid, Ethylenoxid und/oder Propylenoxid, insbesondere Propylenoxid eingesetzt.

Als geeignete H-funktionelle Startersubstanz ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen. Die Fähigkeit zur Verwendung eines Starters mit einer niedrigen Molmasse ist ein deutlicher Vorteil gegenüber der Verwendung von oligomeren Startern, die mittels einer vorherigen Oxyalkylierung hergestellt sind. Insbesondere wird eine Wirtschaftlichkeit erreicht, die durch das Weglassen eines getrennten Oxyalkylierungsverfahrens ermöglicht wird.

Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten, eingesetzt. Beispielhaft handelt es sich bei den C1-C24

Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als mono-H-funktionelle Startersubstanzen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an $\varepsilon$-Caprolacton.

Die H-funktionellen Startersubstanzen können auch aus der Substanzklasse der Polyetherpolyole ausgewählt sein, die ein Molekulargewicht $M_n$ im Bereich von 18 bis 4500 g/mol und eine Funktionalität von 2 bis 3 aufweisen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln.

Die H-funktionellen Startersubstanzen können auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatpolyole dienen können.

Des Weiteren können als H-funktionelle Startersubstanzen Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.

Es können auch Polyethercarbonatpolyole als H-funktionelle Startersubstanzen eingesetzt werden. Die H-funktionellen Startersubstanzen weisen im Allgemeinen eine Funktionalität (d.h. Anzahl an für die Polymerisation aktiven H-Atomen pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol und Polyetherpolyole mit einem Molekulargewicht $M_n$ im Bereich von 150 bis 4500 g/mol und einer Funktionalität von 2 bis 3.

Zu Schritt ($\alpha$):

Vorzugsweise wird in Schritt ($\alpha$) ein Suspensionsmittel, das keine H-funktionellen Gruppen enthält, im Reaktor gegebenenfalls gemeinsam mit DMC-Katalysator vorgelegt, und dabei wird keine H-funktionelle Startersubstanz im

Reaktor vorgelegt. Alternativ können auch in Schritt (α) ein Suspensionsmittel, das keine H-funktionellen Gruppen enthält, und zusätzlich eine Teilmenge der H-funktionellen Startersubstanz sowie gegebenenfalls Katalysator im Reaktor vorgelegt werden, oder es können auch in Schritt (α) eine Teilmenge der H-funktionellen Startersubstanz sowie gegebenenfalls Katalysator im Reaktor vorgelegt werden. Weiterhin können auch in Schritt (α) die Gesamtmenge der H-funktionellen Startersubstanz sowie gegebenenfalls DMC-Katalysator im Reaktor vorgelegt werden.

Der DMC-Katalysator wird vorzugsweise in einer Menge eingesetzt, so dass der Gehalt an DMC-Katalysator im resultierenden Reaktionsprodukt von Schritt (γ) 10 bis 10000 ppm, besonders bevorzugt 20 bis 5000 ppm und höchst bevorzugt 50 bis 500 ppm beträgt.

In einer bevorzugten Ausführungsform wird in das resultierende Gemisch aus DMC-Katalysator mit Suspensionsmittel und/oder H-funktioneller Startersubstanz bei einer Temperatur von 90 bis 150°C, besonders bevorzugt von 100 bis 140°C Inertgas (beispielsweise Argon oder Stickstoff), ein Inertgas-Kohlendioxid-Gemisch oder Kohlendioxid eingeleitet und gleichzeitig ein reduzierter Druck (absolut) von 10 mbar bis 800 mbar, besonders bevorzugt von 50 mbar bis 200 mbar angelegt.

In einer alternativen bevorzugten Ausführungsform wird das resultierende Gemisch aus DMC-Katalysator mit Suspensionsmittel und/oder H-funktioneller Startersubstanz bei einer Temperatur von 90 bis 150°C, besonders bevorzugt von 100 bis 140°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), eines Inertgas-Kohlendioxid-Gemisches oder Kohlendioxid beaufschlagt und jeweils anschließend der Überdruck auf ca. 1 bar (absolut) reduziert.

Der DMC-Katalysator kann beispielsweise in fester Form oder als Suspension in einem Suspensionsmittel oder als Suspension in einer H-funktionellen Startersubstanz zugegeben werden. In einer weiteren bevorzugten Ausführungsform wird in Schritt (α)

(α-I) Suspensionsmittel und/oder eine Teilmenge oder die Gesamtmenge an H-funktioneller Startersubstanz vorgelegt und

(α-II) die Temperatur des Suspensionsmittels und/oder der H-funktionellen Startersubstanz auf 50 bis 200°C, bevorzugt 80 bis 160°C, besonders bevorzugt 100 bis 140°C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff), ein Inertgas-Kohlendioxid-Strom oder ein Kohlendioxid-Strom durch den Reaktor geleitet wird,

wobei der DMC-Katalysator zum Suspensionsmittel und/oder zur H-funktionellen Startersubstanz in Schritt (α-I) oder unmittelbar anschließend in Schritt (α-II) zugesetzt wird, und
wobei das Suspensionsmittel keine H-funktionellen Gruppen enthält.

<u>Zu Schritt (β):</u>

Schritt (β) dient der Aktivierung des DMC-Katalysators. Dieser Schritt kann gegebenenfalls unter Inertgasatmosphäre, unter einer Atmosphäre aus Inertgas-Kohlendioxid-Gemisch oder unter einer Kohlendioxid-Atmosphäre durchgeführt werden. Als Aktivierung im Sinne dieser Erfindung wird ein Schritt bezeichnet, bei dem eine Teilmenge Alkylenoxid bei Temperaturen von 90 bis 150°C zur DMC-Katalysator-Suspension zugegeben wird und dann die Zugabe des Alkylenoxids unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls $CO_2$ ein Druckabfall im Reaktor beobachtet wird. Der Verfahrensschritt der Aktivierung ist die Zeitspanne von der Zugabe der Teilmenge an Alkylenoxid, gegebenenfalls in Gegenwart von $CO_2$, zum DMC-Katalysator bis zum Auftreten der Wärmeentwicklung. Gegebenenfalls kann die Teilmenge Alkylenoxid in mehreren Einzelschritten, gegebenenfalls in Gegenwart von $CO_2$, zum DMC-Katalysator gegeben werden und dann jeweils die Zugabe des Alkylenoxids unterbrochen werden. Im diesem Fall umfasst der Verfahrensschritt der Aktivierung die Zeitspanne von der Zugabe der ersten Teilmenge an Alkylenoxid, gegebenenfalls in Gegenwart von $CO_2$, zum DMC-Katalysator bis zum Auftreten der Wärmeentwicklung nach Zugabe der letzten Teilmenge an Alkylenoxid. Im Allgemeinen kann dem Aktivierungsschritt ein Schritt zum Trocknen des DMC-Katalysators und ggf. der H-funktionellen Startersubstanz bei erhöhter Temperatur und/oder reduziertem Druck, gegebenenfalls unter Durchleiten eines Inertgases durch die Reaktionsmischung, vorgelagert sein.

Die Dosierung eines oder mehrerer Alkylenoxide (und gegebenenfalls des Kohlendioxids) kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases (wie beispielsweise Stickstoff oder Argon) oder von Kohlendioxid eingestellt, wobei der Druck(absolut) 5 mbar bis 100 bar, vorzugsweise 10 mbar bis 50 bar und bevorzugt 20 mbar bis 50 bar beträgt.

In einer bevorzugten Ausführungsform beträgt die bei der Aktivierung in Schritt (β) eingesetzte Menge von einem oder mehreren Alkylenoxiden 0,1 bis 25,0 Gew.-%, bevorzugt 1,0 bis 20,0 Gew.-%, besonders bevorzugt 2,0 bis

16,0 Gew.-% (bezogen auf die im Schritt (α) eingesetzte Menge an Suspensionsmittel und/oder H-funktioneller Startersubstanz). Das Alkylenoxid kann in einem Schritt oder portionsweise in mehreren Teilmengen zugegeben werden. Bevorzugt wird nach Zugabe einer Teilmenge an Alkylenoxid die Zugabe des Alkylenoxids bis zum Auftreten der Wärmeentwicklung unterbrochen und erst dann die nächste Teilmenge an Alkylenoxid zugegeben. Bevorzugt ist auch eine zweistufige Aktivierung (Schritt β), wobei

(β1) in einer ersten Aktivierungsstufe die Zugabe einer ersten Teilmenge von Alkylenoxid unter Inertgasatmosphäre oder Kohlendioxid-Atmosphäre erfolgt und
(β2) in einer zweiten Aktivierungsstufe die Zugabe einer zweiten Teilmenge von Alkylenoxid unter Kohlendioxid-Atmosphäre erfolgt.

Zu Schritt (γ):

Für das erfindungsgemäße Verfahren hat sich gezeigt, dass Schritt (γ) vorteilhafterweise bei 50 bis 150°C, bevorzugt bei 60 bis 145°C, besonders bevorzugt bei 70 bis 140°C und ganz besonders bevorzugt bei 90 bis 130°C durchgeführt wird. Unterhalb von 50°C läuft die Reaktion unter Bildung eines Polyethercarbonatpolyols nur sehr langsam ab. Bei Temperaturen oberhalb von 150°C steigt die Menge an unerwünschten Nebenprodukten stark an.

Die Dosierung eines oder mehrerer Alkylenoxide und des Kohlendioxids kann simultan, wechselweise oder sequentiell erfolgen, wobei die gesamte Kohlendioxidmenge auf einmal oder dosiert über die Reaktionszeit zugegeben werden kann. Es ist möglich, während der Zugabe des Alkylenoxids den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung eines oder mehrerer Alkylenoxide erfolgt simultan, wechselweise oder sequentiell zur Kohlendioxid Dosierung. Es ist möglich, das Alkylenoxid mit konstanter Dosierrate zu dosieren oder die Dosierrate allmählich oder schrittweise zu steigern oder zu senken oder das Alkylenoxid portionsweise zuzugeben. Bevorzugt wird das Alkylenoxid mit konstanter Dosierrate dem Reaktionsgemisch zugegeben. Werden mehrere Alkylenoxide zur Synthese der Polyethercarbonatpolyole eingesetzt, so können die Alkylenoxide einzeln oder als Gemisch dosiert werden. Die Dosierung der Alkylenoxide kann simultan, wechselweise oder sequentiell über jeweils separate Dosierungen (Zugaben) erfolgen oder über eine oder mehrere Dosierungen, wobei die Alkylenoxide einzeln oder als Gemisch dosiert werden können. Über die Art und/oder Reihenfolge der Dosierung der Alkylenoxide und/oder des Kohlendioxids ist es möglich, statistische, alternierende, blockartige oder gradientenartige Polyethercarbonatpolyole zu synthetisieren.

Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonatpolyole als vorteilhaft erwiesen. Es ist möglich, das Kohlendioxid kontinuierlich oder diskontinuierlich zuzuführen. Dies hängt davon ab, wie schnell die Alkylenoxide und das $CO_2$ verbraucht werden und ob das Produkt gegebenenfalls $CO_2$-freie Polyether-Blöcke oder Blöcke mit unterschiedlichem $CO_2$-Gehalt enthalten soll. Die Menge des Kohlendioxids (angegeben als Druck) kann bei der Zugabe der Alkylenoxide ebenso variieren. Je nach den gewählten Reaktionsbedingungen ist es möglich, das $CO_2$ im gasförmigen, flüssigen oder überkritischen Zustand in den Reaktor einzuleiten. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

Bei einem Verfahren mit Dosierung der H-funktionellen Startersubstanz in Schritt (γ) kann die Dosierung der H-funktionellen Startersubstanz, des Alkylenoxids und gegebenenfalls auch des Kohlendioxids simultan oder sequentiell (portionsweise) erfolgen, beispielsweise kann die gesamte Kohlendioxidmenge, die Menge an H-funktioneller Startersubstanz und/oder die in Schritt (γ) dosierte Menge an Alkylenoxid auf einmal oder kontinuierlich zugegeben werden. Der hier verwendete Begriff "kontinuierlich" kann als Modus der Zugabe eines Reaktanden so definiert werden, dass eine für die Copolymerisation wirksame Konzentration des Reaktanden aufrechterhalten wird, d.h. beispielsweise kann die Dosierung mit einer konstanten Dosierrate, mit einer variierenden Dosierrate oder portionsweise erfolgen.

Es ist möglich, während der Zugabe des Alkylenoxids und/oder der H-funktionellen Startersubstanz den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung des Alkylenoxids und/oder der H-funktionellen Startersubstanz erfolgt simultan oder sequentiell zur Kohlendioxid-Dosierung. Es ist möglich, das Alkylenoxid mit konstanter Dosierrate zu dosieren oder die Dosierrate allmählich oder schrittweise zu steigern oder zu senken oder das Alkylenoxid portionsweise zuzugeben. Bevorzugt wird das Alkylenoxid mit konstanter Dosierrate dem Reaktionsgemisch zugegeben. Werden mehrere Alkylenoxide zur Synthese der Polyethercarbonatpolyole eingesetzt, so können die Alkylenoxide einzeln oder als Gemisch dosiert werden. Die Dosierung der Alkylenoxide

bzw. der H-funktionellen Startersubstanzen kann simultan oder sequentiell über jeweils separate Dosierungen (Zugaben) erfolgen oder über eine oder mehrere Dosierungen, wobei die Alkylenoxide bzw. die H-funktionellen Startersubstanzen einzeln oder als Gemisch dosiert werden können. Über die Art und/oder Reihenfolge der Dosierung der H-funktionellen Startersubstanzen, der Alkylenoxide und/oder des Kohlendioxids ist es möglich, statistische, alternierende, blockartige oder gradientenartige Polyethercarbonatpolyole zu synthetisieren.

In einer bevorzugten Ausführungsform wird in Schritt (γ) die Dosierung der H-funktionellen Startersubstanz zeitlich vor der Zugabe des Alkylenoxids beendet.

Bevorzugt werden die Polyethercarbonatpolyole in einem kontinuierlichen Verfahren hergestellt, das sowohl eine kontinuierliche Copolymerisation als auch eine kontinuierliche Zugabe der H-funktionellen Startersubstanz umfasst. Gegenstand der Erfindung ist daher auch ein Verfahren, wobei in Schritt (γ) H-funktionelle Startersubstanz, Alkylenoxid sowie Katalysator in Gegenwart von Kohlendioxid ("Copolymerisation") kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei in Schritt (γ) der Katalysator, welcher in H-funktioneller Startersubstanz suspendiert wurde, kontinuierlich zugegeben. Die Dosierung des Alkylenoxids, der H-funktionellen Startersubstanz und des Katalysators kann über separate oder gemeinsame Dosierstellen erfolgen. In einer bevorzugten Ausführungsform werden das Alkylenoxid und die H-funktionelle Startersubstanz über separate Dosierstellen kontinuierlich dem Reaktionsgemisch zugeführt. Diese Zugabe der H-funktionellen Startersubstanz kann als kontinuierliche Zudosierung in den Reaktor oder portionsweise erfolgen.

Beispielsweise wird für das kontinuierliche Verfahren zur Herstellung der Polyethercarbonatpolyole gemäß den Schritten (α) und (β) eine aktivierte DMC-Katalysator-Suspensionsmittel-Mischung hergestellt, dann werden gemäß Schritt (γ)

(γ1) jeweils eine Teilmenge an H-funktioneller Startersubstanz, Alkylenoxid und Kohlendioxid zudosiert zum Initiieren der Copolymerisation, und

(γ2) während des Fortschreitens der Copolymerisation jeweils die verbleibende Menge an DMC-Katalysator, H-funktioneller Startersubstanz und Alkylenoxid in Gegenwart von Kohlendioxid kontinuierlich zudosiert, wobei gleichzeitig resultierendes Reaktionsgemisch kontinuierlich aus dem Reaktor entfernt wird.

In Schritt (γ) wird der DMC-Katalysator bevorzugt suspendiert in der H-funktionellen Startersubstanz zugegeben.

Bevorzugt beträgt die Verweilzeit der in den Reaktor dosierten Volumenelemente 1,8 bis 5,0 Stunden, besonders bevorzugt 2,5 bis 5,0 Stunden, besonders bevorzugt 3,0 bis 4,8 Stunden und insbesondere 4,0 bis 4,8 Stunden.

Die Schritte (α), (β) und (γ) können in demselben Reaktor oder jeweils separat in unterschiedlichen Reaktoren durchgeführt werden. Besonders bevorzugte Reaktortypen sind: Rohrreaktoren, Rührkessel, Schlaufenreaktoren.

Die Schritte (α), (β) und (γ) können in einem Rührkessel durchgeführt werden, wobei der Rührkessel je nach Ausführungsform und Betriebsweise über den Reaktormantel, innen liegende und/oder in einem Umpumpkreislauf befindliche Kühlflächen gekühlt wird. Sowohl im Semi-batch-Verfahren, bei dem das Produkt erst nach Ende der Reaktion entnommen wird, als auch im kontinuierlichen Verfahren, bei dem das Produkt kontinuierlich entnommen wird, ist besonders auf die Dosiergeschwindigkeit des Alkylenoxids zu achten. Sie ist so einzustellen, dass trotz der inhibierenden Wirkung des Kohlendioxids die Alkylenoxide genügend schnell abreagieren.

In einer bevorzugten Ausführungsform wird die gemäß den Schritten (α) und (β) resultierende aktivierte DMC-Katalysator enthaltende Mischung in demselben Reaktor weiter mit Alkylenoxid, H-funktioneller Startersubstanz und Kohlendioxid umgesetzt. In einer weiteren bevorzugten Ausführungsform wird die gemäß den Schritten (α) und (β) resultierende aktivierte DMC-Katalysator enthaltende Mischung in einem anderen Reaktionsbehältnis (beispielsweise einem Rührkessel, Rohrreaktor oder Schlaufenreaktor) weiter mit Alkylenoxid, H-funktioneller Startersubstanz und Kohlendioxid umgesetzt.

Bei Reaktionsführung in einem Rohrreaktor wird die gemäß den Schritten (α) und (β) resultierende aktivierte DMC-Katalysator enthaltende Mischung, H-funktionelle Startersubstanz, Alkylenoxid und Kohlendioxid kontinuierlich durch ein Rohr gepumpt. Die molaren Verhältnisse der Reaktionspartner variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern.

Schlaufenreaktoren können ebenfalls zur Durchführung der Schritte (α), (β) und (γ) verwendet werden. Hierunter fallen im Allgemeinen Reaktoren mit Stoffrückführung, wie beispielsweise ein Strahlschlaufenreaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren. Der Einsatz eines Schlaufenreaktors ist insbesondere deshalb von Vorteil, weil hier eine Rückvermischung realisiert werden

kann, so dass die Konzentration an freien Alkylenoxiden in der Reaktionsmischung im optimalen Bereich, vorzugsweise im Bereich > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung) gehalten werden kann.

Vorzugsweise werden die Schritte ($\alpha$) und ($\beta$) in einem ersten Reaktor durchgeführt, und das resultierende Reaktionsgemisch dann in einen zweiten Reaktor für die Copolymerisation gemäß Schritt ($\gamma$) überführt. Es ist aber auch möglich, die Schritte ($\alpha$), ($\beta$) und ($\gamma$) in einem Reaktor durchzuführen.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des Katalysators oder des Reaktanden aufrechterhalten wird. Die Katalysatorzufuhr kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die Katalysatorkonzentration während des Hauptteils des Verlaufs der kontinuierlichen Reaktion im Wesentlichen auf derselben Konzentration gehalten wird und dass Startersubstanz während des Hauptteils des Copolymerisations-Verfahrens vorhanden ist. Eine inkrementelle Zugabe von Katalysator und/oder Reaktant, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

DMC-Katalysator:

DMC-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonatpolyolen bei sehr geringen Katalysatorkonzentrationen, so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Die DMC-Katalysatoren werden vorzugsweise erhalten, indem man

(i) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(ii) wobei im zweiten Schritt der Feststoff aus der aus (i) erhaltenen Suspension durch bekannte Techniken (wie Zentrifugation oder Filtration) abgetrennt wird,
(iii) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(iv) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den DMC-Katalysatoren enthaltenen Doppelmetallcyanid-Verbindungen sind die Reaktionsprodukte wasserlöslicher Metallsalze und wasserlöslicher Metallcyanidsalze. Beispielsweise werden eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder tert-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (II),

$$M(X)_n \qquad (II)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (III),

$$M_r(X)_3 \qquad (III)$$

wobei

M ausgewählt ist aus den Metallkationen $Fe^{3+}$, $Al^{3+}$, $Co^{3+}$ und $Cr^{3+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (IV),

$$M(X)_s \qquad (IV)$$

wobei

M ausgewählt ist aus den Metallkationen $Mo^{4+}$, $V^{4+}$ und $W^{4+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (V),

$$M(X)_t \qquad (V)$$

wobei

M ausgewählt ist aus den Metallkationen $Mo^{6+}$ und $W^{6+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Carboxylat, Cyanat, Thiocyanat, Isocyanat, Isothiocyanat oder Nitrat ist,

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (VI)

$$(Y)_aM'(CN)_b(A)_c \qquad (VI)$$

wobei

M' ausgewählt ist aus einem oder mehreren Metallkationen der Gruppe bestehend aus Fe(II), Fe(III), Co(II), Co(III),

Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$) und Erdalkalimetall (d.h. $Be^{2+}$, $Mg^{2+}$, $Ca^{2+}$, $Sr^{2+}$, $Ba^{2+}$),
A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calciumhexacyanocobaltat(III) und Lithiumhexacyanocobaltat(III).
Bevorzugte Doppelmetallcyanid-Verbindungen, die in den DMC-Katalysatoren enthalten sind, sind Verbindungen der allgemeinen Formel (VII)

$$M_x[M'_{x'}(CN)_y]_z \qquad (VII)$$

worin M wie in Formel (II) bis (V) und
M' wie in Formel (VI) definiert ist, und
x, x', y und z sind ganzzahlig und so gewählt, dass die Elektronenneutralität der Doppelmetallcyanidverbindung gegeben ist.

Vorzugsweise ist

x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).
Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert.-butylether und 3-Methyl-3-oxetan-methanol. Optional werden bei der Herstellung der DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.
Bevorzugt werden bei der Herstellung der DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz (also mindestens ein molares Verhältnis von Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (iii-1) mit einer wässrigen Lösung des organischen Komplexliganden (beispielsweise mit einer wässrigen Lösung des ungesättigten Alkohols) gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem Katalysator zu entfernen. Besonders bevorzugt liegt die Menge des organischen Komplexliganden (beispielsweise ungesättigten Alkohols) in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus organischen Komplexliganden (beispielsweise ungesättigter Alkohol) und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im allgemeinen 20 - 100°C und bei Drücken von im Allgemeinen 0,1 mbar bis Normaldruck (1013 mbar) getrocknet.

Ein bevorzugtes Verfahren zur Isolierung der DMC-Katalysatoren aus der Suspension durch Filtration, Filterkuchenwäsche und Trocknung wird in WO-A 01/80994 beschrieben.

Neben den bevorzugt eingesetzten DMC-Katalysatoren auf Basis von Zinkhexacyanocobaltat ($Zn_3[Co(CN)_6]_2$) können für das erfindungsgemäße Verfahren auch andere dem Fachmann aus dem Stand der Technik für die Copolymerisation von Epoxiden und Kohlendioxid bekannte Metallkomplexkatalysatoren auf Basis der Metalle Zink und/oder Cobalt eingesetzt werden. Dies beinhaltet insbesondere sogenannte Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284) und sogenannte Cobalt-Salen-Katalysatoren (beschrieben z.B. in US 7,304,172 B2, US 2012/0165549 A1).

Nach der Durchführung des Verfahrens zur Herstellung des Polyethercarbonatpolyols enthält das resultierende Reaktionsgemisch den DMC-Katalysator in der Regel in Form feiner dispergierter Feststoffpartikel. Daher kann es wünschenswert sein, den DMC-Katalysator möglichst vollständig aus dem resultierenden Reaktionsgemisch zu entfernen. Die Abtrennung des DMC-Katalysators hat einerseits den Vorteil, dass das resultierende Polyethercarbonatpolyol industrie- oder zertifizierungsrelevante Grenzwerte beispielsweise bzgl. Metallgehalten oder bzgl. bei einem Verbleib aktivierten Katalysators im Produkt andernfalls resultierenden Emissionen erfüllt und andererseits dient es der Rückgewinnung des DMC-Katalysators.

Der DMC-Katalysator kann mit Hilfe verschiedener Methoden weitestgehend oder vollständig entfernt werden: Der DMC-Katalysator kann zum Beispiel mit Hilfe der Membranfiltration (Nano-, Ultra- oder Querstromfiltration), mit Hilfe der Kuchenfiltration, mit Hilfe der Pre-Coat Filtration oder mittels Zentrifugation vom Polyethercarbonatpolyol abgetrennt werden.

Vorzugsweise wird zur Abtrennung des DMC-Katalysators ein mehrstufiges Verfahren bestehend aus mindestens zwei Schritten angewendet.

Beispielsweise wird in einem ersten Schritt das zu filtrierende Reaktionsgemisch in einem ersten Filtrationsschritt in einen größeren Teilstrom (Filtrat), bei dem ein Großteil des Katalysators oder der gesamte Katalysator abgetrennt wurde, und einen kleineren Reststrom (Retentat), der den abgetrennten Katalysator enthält, aufgeteilt. In einem zweiten Schritt wird dann der Reststrom einer Dead-End Filtration unterzogen. Hieraus wird ein weiterer Filtratstrom, bei dem ein Großteil des Katalysators oder der gesamte Katalysator abgetrennt wurde, sowie ein feuchter bis weitestgehend trockener Katalysatorrückstand gewonnen.

Alternativ kann der im Polyethercarbonatpolyol enthaltene Katalysator aber auch in einem ersten Schritt einer Adsorption, Agglomeration/Koagulation und/oder Flokkulation unterzogen werden, auf die in einem zweiten oder mehreren nachfolgenden Schritten die Abtrennung der Feststoffphase von dem Polyethercarbonatpolyol folgt. Geeignete Adsorbentien zur mechanisch-physikalischen und/oder chemischen Adsorption umfassen unter anderem aktivierte oder nichtaktivierte Tonerden bzw. Bleicherden (Sepiolite, Montmorillonite, Talk etc.), synthetische Silikate, Aktivkohle, Kieselerden/Kieselgure und aktivierte Kieselerden/Kieselgure in typischen Mengenbereichen von 0,1 Gew% bis 2 Gew%, bevorzugt 0,8 Gew% bis 1,2 Gew% bezogen auf das Polyethercarbonatpolyol bei Temperaturen von 60°C bis 140°C bevorzugt 90°C bis 110°C und Verweilzeiten von 20 min bis 100 min, bevorzugt 40 min bis 80 min, wobei der Adsorptionsschritt inklusive des Einmischens des Adsorbens batchweise oder kontinuierlich durchgeführt werden kann.

Ein bevorzugtes Verfahren zur Abtrennung dieser Feststoffphase (bestehend z.B. aus Adsorbens und DMC-Katalysator) von dem Polyethercarbonatpolyol stellt die Pre-Coat Filtration dar. Hierbei wird die Filteroberfläche abhängig vom Filtrationsverhalten, welches von Teilchengrößenverteilung der abzutrennenden Feststoffphase, mittlerem spezifischem Widerstand des resultierenden Filterkuchens sowie dem Gesamtwiderstand von Pre-Coat-Schicht und Filterkuchen bestimmt wird, mit einem permeablen/durchlässigen Filtrationshilfsmittel (z.B. anorganisch: Celite, Perlite; organisch: Zellulose) mit einer Schichtdicke von 20 mm bis 250 mm bevorzugt 100 mm bis 200 mm beschichtet ("Pre-Coat"). Die Abtrennung der Mehrheit der Feststoffphase (bestehend z.B. aus Adsorbens und DMC-Katalysator) erfolgt dabei an der Oberfläche der Pre-Coat Schicht in Kombination mit einer Tiefenfiltration der kleineren Teilchen innerhalb der Pre-Coat Schicht. Die Temperatur des zu filtrierenden Rohprodukts liegt dabei im Bereich 50°C bis 120°C, bevorzugt 70°C bis 100°C.

Um einen ausreichenden Produktstrom durch die Pre-Coat Schicht und die darauf aufwachsende Kuchenschicht zu gewährleisten, können die Kuchenschicht sowie ein geringer Teil der Pre-Coat Schicht (periodisch oder kontinuierlich) mittels eines Schabers oder Messers abgetragen und aus dem Prozess entfernt werden. Die Verstellung des Schabers bzw. Messers erfolgt dabei mit minimalen Vorschub-Geschwindigkeiten von ca. 20 $\mu$m/min - 500 $\mu$m/min, bevorzugt im Bereich 50 $\mu$m/min - 150 $\mu$m/min.

Sobald die Pre-Coat Schicht durch diesen Prozess weitestgehend oder vollständig abgetragen wurde, wird die Filtration angehalten und eine neue Pre-Coat Schicht auf die Filterfläche aufgezogen. Hierbei kann das Filterhilfsmittel beispielsweise in zyklischem Propylencarbonat suspendiert sein. Typischerweise wird diese Pre-Coat Filtration in Vakuum-Trommel-Filtern durchgeführt. Um im Fall eines viskosen Feedstroms technisch relevante Filtratdurchsätze im Bereich von 0,1 $m^3/(m^2 \cdot h)$ bis 5 $m^3/(m^2 \cdot h)$zu realisieren, kann das Trommel-Filter auch als Druck-Trommel-Filter mit Druckdifferenzen von bis zu 6 bar und mehr zwischen dem zu filtrierenden Medium und der Filtratseite ausgeführt werden.

Grundsätzlich kann die Abtrennung des DMC-Katalysators aus dem resultierenden Reaktionsgemisch des erfindungsgemäßen Verfahrens sowohl vor Entfernung von flüchtigen Bestandteilen (wie z.B. zyklischem Propylencarbonat) als auch nach der Abtrennung von flüchtigen Bestandteilen erfolgen.

Ferner kann die Abtrennung des DMC-Katalysators aus dem resultierenden Reaktionsgemisch des erfindungsgemäßen Verfahrens mit oder ohne den weiteren Zusatz eines Lösungsmittels (insbesondere zyklischem Propylencarbonat) zwecks Absenkung der Viskosität vor oder während der einzelnen, beschriebenen Schritte der Katalysatorabtrennung durchgeführt werden.

Die erfindungsgemäßen Polyethercarbonatpolyole sind dadurch gekennzeichnet, dass mindestens 75 Gew.-%, bevorzugt 75 bis 95 Gew.-%, besonders bevorzugt 80 bis 90 Gew.-% der Polyethersegmente des Polyethercarbonatpolyols, bezogen auf das Gesamtgewicht der Polyethersegmente, aus 3 bis 5 Alkylenoxidbaueinheiten bestehen. Die Standardabweichung $\sigma$ der Polyethersegmente in den erfindungsgemäßen Polyethercarbonatpolyolen beträgt 1,45 oder weniger, bevorzugt 1,00 bis 1,42, besonders bevorzugt 1,10 bis 1,40, insbesondere bevorzugt 1,10 bis 1,30. Die erfindungsgemäßen Polyethercarbonatpolyole weisen bevorzugt ein zahlenmittleres Molekulargewicht $M_n$ von mindestens 800 g/mol, bevorzugt 1000 bis 20000 g/mol, besonders bevorzugt 1500 bis 6000 g/mol auf.

Die Polyethercarbonatpolyole können problemlos verarbeitet werden, insbesondere durch Umsetzung mit Di- und/oder Polyisocyanaten zu Polyurethanpolymeren, insbesondere Polyurethan-Weichschaumstoffen.

Des Weiteren können die Polyethercarbonatpolyole in Anwendungen wie Wasch- und Reinigungsmittelformulierungen, Bohrflüssigkeiten, Kraftstoffadditiven, ionischen und nichtionischen Tensiden, Schmiermitteln, Prozesschemikalien für die Papier- oder Textilherstellung oder kosmetischen Formulierungen verwendet werden.

In einer ersten Ausführungsform betrifft die Erfindung ein Polyethercarbonatpolyol, dadurch gekennzeichnet, dass

mindestens 75 Gew.-% der Polyethersegmente des Polyethercarbonatpolyols, bezogen auf das Gesamtgewicht der Polyethersegmente, aus 3 bis 5 Alkylenoxidbaueinheiten bestehen und die Standardabweichung $\sigma$ der Polyethersegmente im Polyethercarbonatpolyol 1,45 oder weniger beträgt.

In einer zweiten besonderen Ausführungsform betrifft die Erfindung ein Polyethercarbonatpolyol gemäß der ersten Ausführungsform, dadurch gekennzeichnet, dass die Standardabweichung $\sigma$ der Polyethersegmente im Polyethercarbonatpolyol 1,00 bis 1,42 beträgt.

In einer dritten Ausführungsform betrifft die Erfindung ein Polyethercarbonatpolyol gemäß der ersten oder zweiten Ausführungsform, dadurch gekennzeichnet, dass das Polyethercarbonatpolyol ein zahlenmittleres Molekulargewicht Mn von mindestens 800 g/mol, bevorzugt 1000 bis 20000 g/mol, besonders bevorzugt 1500 bis 6000 g/mol aufweist.

In einer vierten Ausführungsform betrifft die Erfindung ein Polyethercarbonatpolyol gemäß einer der Ausführungsformen 1 bis 3, dadurch gekennzeichnet, dass das Polyethercarbonatpolyol durch Anlagerung von Alkylenoxid und Kohlendioxid an eine H-funktionelle Startersubstanz in Gegenwart eines DMC-Katalysators hergestellt wird.

In einer fünften Ausführungsform betrifft die Erfindung ein Polyethercarbonatpolyol gemäß der vierten Ausführungsform, dadurch gekennzeichnet, dass das Polyethercarbonatpolyol hergestellt wird durch ein Verfahren umfassend die Schritte:

($\alpha$) die H-funktionelle Startersubstanz oder ein Gemisch aus mindestens zwei H-funktionellen Startersubstanzen oder ein Suspensionsmittel vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Startersubstanz oder dem Gemisch von mindestens zwei H-funktionellen Startersubstanzen oder dem Suspensionsmittel vor oder nach der Trocknung zugesetzt wird,

($\beta$) zur Aktivierung des DMC-Katalysators eine Teilmenge (bezogen auf die Gesamtmenge der bei der Aktivierung und Copolymerisation eingesetzten Menge an Alkylenoxiden) von Alkylenoxid zu der aus Schritt ($\alpha$) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt ($\beta$) zur Aktivierung auch mehrfach erfolgen kann,

($\gamma$) Alkylenoxid, Kohlendioxid und gegebenenfalls eine H-funktionelle Startersubstanz kontinuierlich zu einem Reaktor enthaltend die aus Schritt ($\beta$) resultierende Mischung zugesetzt werden, wobei wenigstens in einem der Schritte ($\alpha$) oder ($\gamma$) mindestens eine H-funktionelle Startersubstanz eingesetzt wird und

wobei in Schritt ($\gamma$) gebildete Reaktionsprodukte aus dem Reaktor kontinuierlich entnommen werden. In einer sechsten Ausführungsform betrifft die Erfindung ein Polyethercarbonatpolyol gemäß der vierten oder fünften Ausführungsform, dadurch gekennzeichnet, dass das Alkylenoxid ausgewählt ist aus der Gruppe bestehend aus Propylenoxid, Ethylenoxid und Mischungen aus Propylenoxid und Ethylenoxid.

In einer siebten Ausführungsform betrifft die Erfindung ein Polyethercarbonatpolyol gemäß der fünften oder sechsten Ausführungsform, dadurch gekennzeichnet, dass der Reaktor enthaltend die erste Reaktionsmischung in Schritt ($\gamma$) ein rückvermischter Reaktor ist.

In einer achten Ausführungsform betrifft die Erfindung Polyethercarbonatpolyol gemäß einer der Ausführungsformen 4 bis 7, dadurch gekennzeichnet, dass als H-funktionelle Startersubstanz mindestens eine Verbindung ausgewählt aus der Gruppe enthaltend Alkohole, Amine, Thiole, Aminoalkohole, Thioalkohole, Hydroxyester, Polyetherpolyole, Polyesterpolyole, Polyesteretherpolyole, Polycarbonatpolyole, Polyethercarbonatpolyole, Polyethylenimine, Polyetheramine Polytetrahydrofurane, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren und $C_1$-$C_{24}$ Alkyl-Fettsäureester, die im Mittel mindestens 2 OH-Gruppen pro Molekül enthalten, eingesetzt wird.

In einer neunten Ausführungsform betrifft die Erfindung ein Polyethercarbonatpolyol gemäß einer der Ausführungsformen 4 bis 8, dadurch gekennzeichnet, dass das Polyethercarbonatpolyol bei einer Verweilzeit von 1,8 bis 5,0 Stunden hergestellt wird.

In einer zehnten Ausführungsform betrifft die Erfindung die Verwendung von Polyethercarbonatpolyolen gemäß einer der Ausführungsformen 1 bis 9 in Wasch- und Reinigungsmittelformulierungen, Bohrflüssigkeiten, Kraftstoffadditiven, ionischen und nichtionischen Tensiden, Schmiermitteln, Prozesschemikalien für die Papier- oder Textilherstellung oder kosmetischen Formulierungen.

In einer elften Ausführungsform betrifft die Erfindung Polyurethanpolymere, erhalten aus der Reaktion von Polyisocyanaten mit Polyethercarbonatpolyolen gemäß einer der Ausführungsformen 1 bis 9.

## Beispiele

Die Erfindung wird anhand der Beispiele näher erläutert, ohne jedoch darauf beschränkt zu sein.

Eingesetzte H-funktionelle Startersubstanzen (Starter):

PET-1 difunktionelles Poly(oxypropylen)polyol mit einer OH-Zahl von 112 $mg_{KOH}/g$
PET-2 trifunktionelles Poly(oxypropylen)polyol mit einer OH-Zahl von 240 $mg_{KOH}/g$

Der Doppelmetallcyanid-Katalysator wurde hergestellt nach Beispiel 6 von WO-A 01/80994.

Polymerisationsreaktionen, die in einem kontinuierlich betriebenen rückvermischten Reaktor durchgeführt wurden (Beispiele 1 und 2), wurden in einer Anlage der Fa. Parr durchgeführt. Die Anlage bestand aus hintereinandergeschalteten Druckbehältern (Reaktor R1, Reaktor R2 und Reaktor R3).

Reaktor R1 (300 ml Volumen) hatte eine Höhe (innen) von 10,16 cm und einen Innendurchmesser von 6,35 cm. Der Reaktor war ausgestattet mit einem elektrischen Heizmantel (510 Watt maximale Heizleistung). Die Gegenkühlung bestand in einem U-förmig gebogenen Tauchrohr mit 3,17 mm Außendurchmesser, das bis 5 mm über den Boden in den Reaktor ragte und das mit Kühlwasser von ca. 10°C durchströmt wurde. Weiterhin war der Reaktor mit einem Einleitrohr für Inertgas (Stickstoff), einem Einleitrohr für Propylenoxid, sowie einem Thermofühler ausgestattet, die bis 3 mm über den Boden in den Reaktor ragten. Weiterhin war der Reaktor mit einem Einleitrohr für Inertgas oder Kohlendioxid sowie einem Anschluss für Vakuum ausgestattet, die in die Gasphase des Reaktors führten. Der Reaktor wurde über einen Schrägblattrührer gerührt, der vier Rührflügel (45°) mit jeweils einem Durchmesser von 35 mm und einer Höhe von 10 mm aufwies. Über einen Massenflussregler wurde die flüssige Phase in den Reaktor R2 dosiert.

Reaktor R2 war baugleich mit dem Reaktor R1, wobei der Schrägblattrührer jedoch in der Mitte eines Strömungsleitbleches mit Strömungsbrecher angeordnet war. Weiterhin verfügte der Reaktor über ein Schauglas und der Überlauf wurde über ein beheiztes Rohr in den Reaktor R3 geführt. Reaktor R3 (300 ml Volumen) hatte eine Höhe (innen) von 10,16 cm und einen Innendurchmesser von 6,35 cm. Der Reaktor war ausgestattet mit einem elektrischen Heizmantel (510 Watt maximale Heizleistung). Die Gegenkühlung bestand in einem spiralförmig gebogenen Rohr mit 3,17 mm Außendurchmesser, das mit Kühlwasser von ca. 10°C durchströmt wurde. Weiterhin war der Reaktor mit einem Einleitrohr für das Reaktionsgemisch aus Reaktor R2 und einem Thermofühler ausgestattet.. Der Reaktor wurde über einen Schrägblattrührer gerührt, der vier Rührflügel (45°) mit jeweils einem Durchmesser von 35 mm und einer Höhe von 10 mm aufwies. Polymerisationsreaktionen, die in einem semi-batch Verfahren durchgeführt wurden (Beispiele 3 und 4), wurden in einem 300 ml Druckreaktor der Fa. Parr durchgeführt. Der in den Beispielen eingesetzte Druckreaktor hatte eine Höhe (innen) von 10,16 cm und einen Innendurchmesser von 6,35 cm. Der Reaktor war ausgestattet mit einem elektrischen Heizmantel (510 Watt maximale Heizleistung). Die Gegenkühlung bestand in einem U-förmig gebogenen Tauchrohr mit 6 mm Außendurchmesser, das bis 5 mm über den Boden in den Reaktor ragte und das mit Kühlwasser von ca. 10°C durchströmt wurde. Weiterhin war der Reaktor mit einem Einleitrohr sowie einem Thermofühler ausgestattet, die bis 3 mm über den Boden in den Reaktor ragten. Bei dem im Reaktor eingesetzten Rührer handelte es sich um einen Hohlwellenrührer, bei dem das Gas über eine hohle Welle des Rührers in die Reaktionsmischung eingeleitet wurde. Der auf der Hohlwelle angebrachte Rührkörper wies vier Arme auf, hatte einen Durchmesser von 35 mm und eine Höhe von 14 mm. An jedem Ende des Arms waren zwei Gasauslässe angebracht, die einen Durchmesser von 3 mm aufwiesen. Durch die Drehung des Rührers entstand ein Unterdruck derart, dass das über der Reaktionsmischung befindliche Gas ($CO_2$ und ggf. Alkylenoxid) abgesaugt wurde und über die Hohlwelle des Rührers in die Reaktionsmischung eingeleitet wurde.

Die erhaltenen Reaktionsmischungen wurden für die Entfernung der leicht flüchtigen Bestandteile durch einen Fallfilmverdampfer geleitet. Die Lösung (0,1 kg in 1 h) lief entlang der inneren Wand eines von außen auf 120°C beheizten Rohres mit 70 mm Durchmesser und 200 mm Länge herab, wobei die Reaktionsmischung durch drei mit einer Geschwindigkeit von 250 U/min rotierende Rollen mit 10 mm Durchmesser jeweils gleichmäßig als dünner Film auf der inneren Wand des Fallfilmverdampfers verteilt wurde. Im Inneren des Rohres wurde über eine Pumpe ein Druck von <1 mbar eingestellt. Die von leicht flüchtigen Bestandteilen (nicht umgesetzte Epoxide, cyclisches Carbonat) gereinigte Reaktionsmischung wurde am unteren Ende des beheizten Rohres in einer Vorlage aufgefangen.

Bei der Copolymerisation resultierte neben dem cyclischen Propylencarbonat das Polyethercarbonatpolyol, welches einerseits in Formel (VIIIa) gezeigte Polycarbonat-Einheiten enthält,

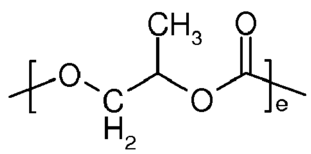

bzw.

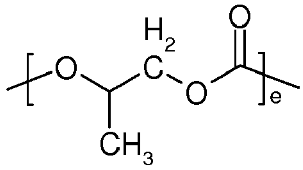

(VIIIa)

und andererseits in Formel (VIIIb) gezeigte Polyether-Einheiten enthält.

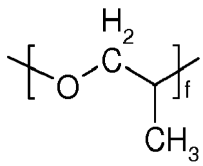

bzw.

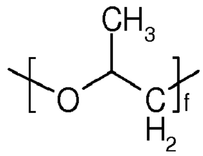

(VIIIb)

Das Verhältnis der Menge an cyclischem Propylencarbonat zu Polyethercarbonatpolyol (Selektivität) und das molare Verhältnis von Carbonatgruppen zu Ethergruppen im Polyethercarbonatpolyol (Verhältnis e/f) sowie der Anteil des umgesetzten Propylenoxids (C in mol%) wurden mittels $^1$H-NMR Spektroskopie bestimmt. Die Probe wurde jeweils in deuteriertem Chloroform gelöst und auf einem Spektrometer der Firma Bruker (AV400, 400 MHz) vermessen.

Die relevanten Resonanzen im $^1$H-NMR Spektrum (bezogen auf TMS = 0 ppm), die zur Integration verwendet wurden, sind wie folgt:

I1: 1,11 - 1,17: Methylgruppe der Polyether-Einheiten, Fläche der Resonanz entspricht drei H Atomen

I2: 1,25 - 1,32: Methylgruppe der Polycarbonat-Einheiten, Fläche der Resonanz entspricht drei H Atomen

I3: 1,45 - 1,49: Methylgruppe des cyclischen Carbonats, Fläche der Resonanz entspricht drei H Atomen

14: 2,95 - 2,99: CH Gruppe für freies, nicht abreagiertes Propylenoxid, Fläche der Resonanz entspricht einem H Atom

Angegeben sind das molare Verhältnis der Menge an cyclischem Propylencarbonat zu Carbonat-Einheiten im Polyethercarbonatpolyol (Selektivität, g/e) und das molare Verhältnis von Carbonatgruppen zu Ethergruppen im Polyethercarbonatpolyol (e/f).

Unter Berücksichtigung der relativen Intensitäten wurden die Werte wie folgt berechnet: Molares Verhältnis der Menge an cyclischem Propylencarbonat zu Carbonat-Einheiten im Polyethercarbonatpolyol (Selektivität, g/e):

$$g/e = I3 / I2 \qquad \text{(IX)}$$

Molares Verhältnis von Carbonatgruppen zu Ethergruppen im Polymer (e/f):

$$e/f = I2 / I1 \qquad \text{(X)}$$

Das zahlenmittlere Molekulargewicht $M_n$ und das gewichtsmittlere Molekulargewicht $M_w$ der entstandenen Polyethercarbonatpolyole wurden mittels Gelpermeationschromatographie (GPC) bestimmt. Es wurde vorgegangen nach DIN 55672-1: "Gelpermeationschromatographie, Teil 1 - Tetrahydrofuran als Elutionsmittel" (SECurity GPC-System

von PSS Polymer Service, Flussrate 1.0 ml/min; Säulen: 2xPSS SDV linear M, 8×300 mm, 5 μm; RID-Detektor). Dabei wurden Polystyrolproben bekannter Molmasse zur Kalibrierung verwendet.

Die OH-Zahl (Hydroxylzahl) wurde in Anlehnung an DIN 53240-2 (Oktober 1998) bestimmt, wobei jedoch *N*-Methylpyrrolidon anstelle von THF/Dichlormethan als Lösemittel verwendet wurde. Es wurde mit 0,5 molarer ethanolischer KOH Lösung titriert (Endpunktserkennung mittels Potentiometrie). Als Prüfsubstanz diente Rizinusöl mit durch Zertifikat festgelegter OH-Zahl.

Die Bestimmung der Viskosität erfolgte auf einem Physica MCR 501 Rheometer der Fa. Anton Paar. Es wurde eine Kegel-Platte-Konfiguration mit einem Abstand von 1 mm gewählt (Messsystem DCP25). Das Polyethercarbonatpolyol (0,1 g) wurde auf der Rheometerplatte aufgebracht und bei 25°C einer Scherung von 0,01 bis 1000 1/s unterworfen und für 10 min alle 10 s die Viskosität gemessen. Angegeben ist die über alle Messpunkte gemittelte Viskosität.

Für die rheologische Bestimmung des Gel-Punktes wurden die Polyethercarbonatpolyole mit einer äquimolaren Menge an Desmodur N3300 (HDI Trimer) und 2000 ppm Dibutylzinnlaurat (2% in Diphenylether) versetzt. Die komplexen Moduli G' (Speichermodul) und G" (Verlustmodul) wurden in einer Oszillationsmessung bei 40°C und einer Frequenz von 1 Hz bestimmt, wobei eine Platte-Platte-Konfiguration mit einem Plattendurchmesser von 15 mm, einem Plattenabstand von 1 mm und einer 10 prozentigen Deformation verwendet wurden. Der Gel-Punkt wurde definiert als der Zeitpunkt, an dem G'=G" wurde.

Die Bestimmung der Segmentlängenverteilung der Polyethersegmente in den Polyethercarbonatpolyolen erfolgte nach Hydrolyse der Polyethercarbonatpolyole durch Gaschromatographie.

Das Produkt wurde mit Gaschromatographie nach Zugabe von n-Heptanol als interner Standard auf einem GC-Gerät vom Typ Thermo SCIENTIFIC TRACE GC Ultra, ausgestattet mit einer OV1-IVA Säule (50 m × 0,25 mm × 0,5 μm, Temperaturprogramm 50-250 °C, 5 min isotherm, Heizrate 8 °C/min, 30 min isotherm; FID 250 °C; $^{t}$PhOH: 14,26 min, $^{t}$MPC: 17,71, $^{t}$DMO: 10,08 min) analysiert.

Für die Analyse des Chromatogramms wurde für die den jeweiligen Segmentlängen zugeordneten Signale über Kalibrierung mit einem repräsentativen Diol (Propylenglykol, Dipropylenglykol, Tripropylenglykol, Tetrapropylenglykol, Pentapropylenglykol, Hexapropylenglykol, Heptapropylenglykol) ein Responsefaktor bestimmt, der den Zusammenhang zwischen dem Detektorsignal und dem eingesetzten Gewicht des Diols beschreibt. Da es sich bei den Isomeren um chemisch gleichartige Spezies handelt, die sich nur durch die Stellung der Gruppen R unterscheiden, wurde für alle Stellungsisomeren derselbe Responsefaktor angenommen. Durch Multiplikation der Flächenprozente des Chromatogramms mit den jeweiligen Responsefaktoren wurden für jede Segmentlänge die Gewichtsprozente der jeweiligen Anteile berechnet.

Als Ergebnis der chromatographischen Analysen erhält man eine Häufigkeitsverteilung der Segmentlängen, ausgedrückt durch eine Angabe in Gewichts-%. Für die Bestimmung der Standardabweichung σ wurde zunächst die Häufigkeitswahrscheinlichkeit gegen die Segmentlänge grafisch aufgetragen und über eine Dichtefunktion der nachfolgenden Formel (XI) ermittelt, wobei die KI-Berechnungsmethode asymptotisch/symmetriebasiert und der Iterationsalgorithmus Levenberg Marquand verwendet wurden, $10^6$ Iterationen durchgeführt wurden, die Konstante $y_0 = 0$ gesetzt wurde und die Variable A, entsprechend dem Wert der maximalen Häufigkeitswahrscheinlichkeit, verwendet wurde.

$$y = Ae^{-\frac{(x-\mu)^2}{2\sigma^2}} \qquad \text{(XI)}$$

wobei

y für die Häufigkeit mit der eine Segmentlänge der Länge n auftritt,
A für den Wert der maximalen Häufigkeitswahrscheinlichkeit,
x für die Segmentlänge n,
μ für den Mittelwert der Dichtefunktion und
σ für die Standardabweichung steht.

**Beispiel 1:**

*Herstellung einer Mischung aus Doppelmetallcyanid-Katalysator und Starter:*

In einem 300 ml Druckreaktor ausgestattet mit einem Schrägblattrührer (Reaktor R1) wurde eine Mischung aus DMC-Katalysator (0,09 g) und PET-1 (250 g) vorgelegt. Der Reaktor wurde geschlossen und die Mischung aus DMC-Katalysator und Starter in Reaktor R1 bei Raumtemperatur (25°C) mit 100 U/min gerührt. Der Druck in Reaktor R1 wurde mit Argon, das in die Gasphase eingeleitet wurde, auf 100 bar eingestellt und während der nachfolgenden Schritte durch Nachdosieren bei 100 bar gehalten. Nach 12 Stunden wurde die Mischung aus DMC-Katalysator (0,09

g) und PET-1 (250 g) in dem 300 ml Druckreaktor (Reaktor R1) nachgefüllt.

*Anfahren des kontinuierlich betriebenen Polymerisationsreaktors:*

Schritt ($\alpha$): In einem 300 ml Druckreaktor ausgestattet mit einem Schrägblattrührer, Strömungsbrecher und Strömungsleitblech (Reaktor R2) wurde eine Mischung aus DMC-Katalysator (0,03 g) und PET-1 (80 g) vorgelegt. Der Reaktor wurde geschlossen, der Druck im Reaktor auf 50 mbar reduziert und der Reaktor auf 130°C aufgeheizt. Anschließend wurde ein leichter Ar-Strom am Boden des Reaktors in die Reaktionsmischung eingestellt. Durch Regeln des leichten Ar-Stroms und gleichzeitiges Entfernen des Gases mit einer Pumpe wurde der Druck im Reaktor auf 50 mbar eingestellt und die Mischung für 30 min bei 130°C unter reduziertem Druck (50 mbar) und leichtem Ar-Strom gerührt.

Schritt ($\beta$): Es wurden langsam (über 15 min) 15 bar $CO_2$ aufgepresst. Während der nachfolgenden Schritte wurde der Druck im Reaktor durch Nachdosieren von $CO_2$ bei 15 bar gehalten. Es wurden 8 g Propylenoxid (PO) mit Hilfe eines Massenflussreglers (200 g/h) zudosiert. Die Abnahme der Konzentration des Propylenoxids wurde über IR-Spektroskopie verfolgt. Die Reaktionsmischung wurde bis zum vollständigen Umsatz des Propylenoxids gerührt (500 U/min). Anschließend wurden noch zwei weitere Male 8 g Propylenoxid mit Hilfe des Massenflussreglers (200 g/h) zudosiert und die Reaktionsmischung jeweils bis zum vollständigen Umsatz des Propylenoxids gerührt (500 U/min). Das Auftreten einer kurzzeitig erhöhten Wärmeentwicklung im Reaktor nach Zugabe des Propylenoxids bestätigte die Aktivierung des DMC-Katalysators. Anschließend wurde die Temperatur der Mischung in Reaktor R2 auf 100°C abgesenkt.

*Betrieb des kontinuierlich betriebenen Polymerisationsreaktors:*

Schritt ($\gamma$): Anschließend wurde das Ventil am Auslass von Reaktor R2 geöffnet. In die Gasphase von Reaktor R2 wurde kontinuierlich $CO_2$ mit einem Fluss von 20 g/h eingeleitet. Der Auslassstrom wurde über einen weiteren Druckbehälter (Reaktor 3) und einen Vordruckregler abgeleitet. Der Druck in den Reaktoren R2 und R3 wurde über den Vordruckregler auf 15 bar eingestellt. Über einen Massenflussregler wurden kontinuierlich 30 g/h Propylenoxid in Reaktor R2 dosiert. Sobald der Überlauf von Reaktor R2 (bei 175 ml Flüssigkeitsvolumen) erreicht wurde, wurde der kontinuierliche Propylenoxid-Strom auf 14 g/h heruntergeregelt. Gleichzeitig wurde die Mischung aus Starter und DMC-Katalysator aus Reaktor R1 kontinuierlich mit einer Rate von 18 g/h in den Reaktor R2 eingeleitet und der $CO_2$ Strom auf einen Fluss von 15 g/h geregelt. Das Produktgemisch wurde über 24 Stunden Betriebsdauer in Reaktor R3 bei 100°C unter Druck aufgefangen und bei 200 U/min gerührt. Die Verweilzeit der in den Reaktor dosierten Volumenelemente betrug konstant 4,5 h.

*Charakterisierung des erhaltenen Produktes :*

Die Selektivität g/e betrug 0,26 und das molare Verhältnis von Carbonatgruppen zu Ethergruppen im Polyethercarbonatpolyol e/f betrug 10,61/89,39.

Das erhaltene Polyethercarbonatpolyol wies ein Molekulargewicht $M_n$ = 2871 g/mol, $M_w$ = 3244 g/mol und einen Polydispersitätsindex $M_w/M_n$ von 1,13 auf.

Die OH-Zahl des erhaltenen Gemisches war 63,9 $mg_{KOH}/g$.

Die Viskosität des Produktgemisches betrug 0,9 Pa·s.

Die Zeit bis zur Erreichung des Gel-Punktes betrug 6,8 min.

**Tabelle 1:** Verteilung der Polyethersegmente im Polyethercarbonatpolyol aus Beispiel 1

| Anzahl der PO-Einheiten im Polyethersegment | Anteil [Gew.-%] |
|---|---|
| 1 | 0,15 |
| 2 | 3,07 |
| 3 | 33,80 |
| 4 | 30,59 |
| 5 | 22,00 |
| 6 | 6,97 |
| 7 | 3,41 |

Die Standardabweichung $\sigma$ der Verteilung beträgt 1,16.

**Beispiel 2:**

*Herstellung einer Mischung aus Doppelmetallcyanid-Katalysator und Starter:*

In einem 300 ml Druckreaktor ausgestattet mit einem Schrägblattrührer (Reaktor R1) wurde eine Mischung aus DMC-Katalysator (0,20 g) und PET-2 (250 g) vorgelegt. Der Reaktor wurde geschlossen und die Mischung aus DMC-Katalysator und Starter in Reaktor 1 bei Raumtemperatur (25°C) mit 100 U/min gerührt. Der Druck in Reaktor R1 wurde mit Argon, das in die Gasphase eingeleitet wurde, auf 100 bar eingestellt und während der nachfolgenden Schritte durch Nachdosieren bei 100 bar gehalten.

*Anfahren des kontinuierlich betriebenen Polymerisationsreaktors:*

Schritt (α): In einem 300 ml Druckreaktor ausgestattet mit Schrägblattrührer, Strömungsbrecher und Strömungsleitblech (Reaktor R2) wurde eine Mischung aus DMC-Katalysator (0,06 g) und PET-2 (80 g) vorgelegt. Der Reaktor wurde geschlossen, der Druck im Reaktor auf 50 mbar reduziert und der Reaktor auf 130°C aufgeheizt. Anschließend wurde ein leichter Ar-Strom am Boden des Reaktors in die Reaktionsmischung eingestellt. Durch Regeln des leichten Ar-Stroms und gleichzeitiges Entfernen des Gases mit einer Pumpe wurde der Druck im Reaktor auf 50 mbar eingestellt und die Mischung für 30 min bei 130°C unter reduziertem Druck (50 mbar) und leichtem Ar-Strom gerührt.

Schritt (β): Es wurden langsam (über 15 min) 50 bar $CO_2$ aufgepresst. Während der nachfolgenden Schritte wurde der Druck im Reaktor durch Nachdosieren von $CO_2$ bei 50 bar gehalten. Es wurden 8 g Propylenoxid mit Hilfe eines Massenflussreglers (200 g/h) zudosiert. Die Abnahme der Konzentration des Propylenoxids wurde über IR-Spektroskopie verfolgt. Die Reaktionsmischung wurde bis zum vollständigen Umsatz des Propylenoxids gerührt (500 U/min). Anschließend wurden noch zwei weitere Male 8 g Propylenoxid mit Hilfe des Massenflussreglers (200 g/h) zudosiert und die Reaktionsmischung jeweils bis zum vollständigen Umsatz des Propylenoxids gerührt (500 U/min). Das Auftreten einer kurzzeitig erhöhten Wärmeentwicklung im Reaktor nach Zugabe des Propylenoxids bestätigte die Aktivierung des DMC-Katalysators. Anschließend wurde die Temperatur der Mischung in Reaktor R2 auf 100°C abgesenkt.

*Betrieb des kontinuierlich betriebenen Polymerisationsreaktors:*

Schritt (γ): Anschließend wurde das Ventil am Auslass von Reaktor R2 geöffnet. In die Gasphase von Reaktor R2 wurde kontinuierlich $CO_2$ mit einem Fluss von 20 g/h eingeleitet. Der Auslassstrom wurde über einen weiteren Druckbehälter (Reaktor R3) und einen Vordruckregler abgeleitet. Der Druck in den Reaktoren R2 und R3 wurde über den Vordruckregler auf 50 bar eingestellt. Über einen Massenflussregler wurden kontinuierlich 30 g/h Propylenoxid in Reaktor R2 dosiert. Sobald der Überlauf von Reaktor R2 (bei 175 ml Flüssigkeitsvolumen) erreicht wurde, wurde der kontinuierliche Propylenoxid-Strom auf 29 g/h heruntergeregelt. Gleichzeitig wurde die Mischung aus Starter und DMC-Katalysator aus Reaktor R1 kontinuierlich mit einer Rate von 10 g/h in den Reaktor R2 eingeleitet. Das Produktgemisch wurde über 20 Stunden Betriebsdauer in Reaktor R3 bei 100°C unter Druck aufgefangen und bei 200 U/min gerührt.

Die Verweilzeit der in den Reaktor dosierten Volumenelemente betrug konstant 3,4 h.

*Charakterisierung des erhaltenen Produktes:*

Die Selektivität g/e betrug 0,06 und das molare Verhältnis von Carbonatgruppen zu Ethergruppen im Polyethercarbonatpolyol e/f betrug 29,99/70,01.

Das erhaltene Polyethercarbonatpolyol wies ein Molekulargewicht $M_n$ = 3049 g/mol, $M_w$ = 4013 g/mol und einen Polydispersitätsindex $M_w/M_n$ von 1,31 auf.

Die OH-Zahl des erhaltenen Gemisches war 62,5 $mg_{KOH}/g$.

Die Viskosität des Produktgemisches betrug 5,7 Pa·s.

Die Zeit bis zur Erreichung des Gel-Punktes betrug 6,2 min.

**Tabelle 2:** Segmentlängenverteilung der Polyethersegmente im Polyethercarbonatpolyol aus Beispiel 2

| Anzahl der PO-Einheiten im Polyethersegment | Anteil [Gew.-%] |
|---|---|
| 1 | 0,24 |
| 2 | 4,13 |
| 3 | 25,08 |
| 4 | 28,85 |

(fortgesetzt)

| Anzahl der PO-Einheiten im Polyethersegment | Anteil [Gew.-%] |
|---|---|
| 5 | 21,90 |
| 6 | 12,37 |
| 7 | 7,42 |

Die Standardabweichung σ der Verteilung beträgt 1,39.

**Beispiel 3:**

Schritt (α): In einem 300 ml Druckreaktor ausgestattet mit einem Hohlwellenrührer wurde eine Mischung aus DMC-Katalysator (16 mg) und PET-1 (60 g) vorgelegt und 30 min bei 130°C unter leichtem Vakuum (50 mbar) und leichtem Ar-Strom gerührt (800 rpm).

Schritt (β): Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 6 g Propylenoxid mit Hilfe einer HPLC-Pumpe (1 mL/min) zu dosiert und die Reaktionsmischung für 20 min gerührt (800 rpm). Anschließend wurden noch zwei weitere Male 6 g Propylenoxid mit Hilfe der HPLC-Pumpe (1 ml/min) zudosiert und die Reaktionsmischung für 20 min gerührt (800 rpm). Das Auftreten einer kurzzeitig erhöhten Wärmeentwicklung im Reaktor nach Zugabe des Propylenoxids bestätigte die Aktivierung des DMC-Katalysators.

Schritt (γ): Nach Abkühlen auf 100°C wurden 42,0 g Propylenoxid über eine HPLC-Pumpe (1 mL/min) zudosiert, wobei die Reaktionsmischung weiterhin gerührt wurde (800 rpm). Nach Ende der Zugabe von Propylenoxid wurde die Reaktionsmischung noch weitere 2 h bei 100°C gerührt. Durch Abkühlen des Reaktors im Eisbad wurde die Reaktion beendet.

*Charakterisierung des erhaltenen Produktes:*

Die Selektivität g/e betrug 0,15 und das molare Verhältnis von Carbonatgruppen zu Ethergruppen im Polymer e/f betrug 11,20/88,80.

Das erhaltene Polyethercarbonat wies ein Molekulargewicht $M_n$ = 2170 g/mol, $M_w$ = 2452 g/mol und einen Polydispersitätsindex $M_w/M_n$ von 1,13 auf.

Die OH-Zahl des erhaltenen Gemisches war 56,5 $mg_{KOH}/g$.

Die Viskosität des erhaltenen Gemisches betrug 1,8 Pa·s.

Die Zeit bis zur Erreichung des Gel-Punktes betrug 10,7 min.

**Tabelle 3:** Segmentlängenverteilung der Polyethersegmente im Polyethercarbonatpolyol aus Beispiel 3

| Anzahl der PO-Einheiten im Polyethersegment | Anteil [Gew.-%] |
|---|---|
| 1 | 0,25 |
| 2 | 4,18 |
| 3 | 26,41 |
| 4 | 23,93 |
| 5 | 24,30 |
| 6 | 12,35 |
| 7 | 8,58 |

Die Standardabweichung σ der Verteilung beträgt 1,66.

**Beispiel 4:**

Schritt (α): In einem 300 ml Druckreaktor ausgestattet mit einem Hohlwellenrührer wurde eine Mischung aus DMC-Katalysator (16 mg) und PET-2 (21) vorgelegt und 30 min bei 130°C unter leichtem Vakuum (50 mbar) und leichtem

Ar-Strom gerührt (800 rpm).

Schritt (β): Es wurden 50 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 50 bar gehalten. Es wurden 2 g Propylenoxid mit Hilfe einer HPLC-Pumpe (1 mL/min) zu dosiert und die Reaktionsmischung für 20 min gerührt (800 rpm). Anschließend wurden noch zwei weitere mal 2 g Propylenoxid mit Hilfe der HPLC-Pumpe (1 ml/min) zudosiert und die Reaktionsmischung für 20 min gerührt (800 rpm). Das Auftreten einer kurzzeitig erhöhten Wärmeentwicklung im Reaktor nach Zugabe des Propylenoxids bestätigte die Aktivierung des DMC-Katalysators.

Schritt (γ): Nach Abkühlen auf 100°C wurden 50 g Propylenoxid über eine HPLC-Pumpe (1 mL/min) zudosiert, wobei die Reaktionsmischung weiterhin gerührt wurde (800 rpm). Nach Ende der Zugabe von Propylenoxid wurde die Reaktionsmischung noch weitere 2 h bei 100°C gerührt. Durch Abkühlen des Reaktors im Eisbad wurde die Reaktion beendet.

*Charakterisierung des erhaltenen Produktes:*

Die Selektivität g/e betrug 0,12 und das molare Verhältnis von Carbonatgruppen zu Ethergruppen im Polymer e/f betrug 27,18/72,82.

Das erhaltene Polyethercarbonat wies ein Molekulargewicht $M_n$ = 2811 g/mol, $M_w$ = 2961 g/mol und einen Polydispersitätsindex $M_w/M_n$ von 1,05 auf.

Die OH-Zahl des erhaltenen Gemisches war 56,4 $mg_{KOH}$/g.

Die Viskosität des erhaltenen Gemisches betrug 8,4 Pa·s.

Die Zeit bis zur Erreichung des Gel-Punktes betrug 7,1 min.

**Tabelle 4:** Segmentlängenverteilung der Polyethersegmente im Polyethercarbonatpolyol aus Beispiel 4

| Anzahl der PO-Einheiten im Polyethersegment | Anteil [Gew.-%] |
|---|---|
| 1 | 0,65 |
| 2 | 8,82 |
| 3 | 30,27 |
| 4 | 24,03 |
| 5 | 16,51 |
| 6 | 11,65 |
| 7 | 8,07 |

Die Standardabweichung σ der Verteilung beträgt 1,49.

**Tabelle 5:** Übersicht der Resultate aus Beispielen 1 bis 4

| Beispiel | Starter | Druck [bar] | Reaktor | Viskosität [Pa·s] | Gel-Punkt [min] | Standardabweichung σ |
|---|---|---|---|---|---|---|
| 1 | PET-1 | 15 | Rückvermischt | 0,9 | 6,8 | 1,16 |
| 2 | PET-2 | 50 | Rückvermischt | 5,7 | 6,2 | 1,39 |
| 3* | PET-1 | 15 | Nicht rückvermischt | 1,8 | 10,7 | 1,66 |
| 4* | PET-2 | 50 | Nicht rückvermischt | 8,4 | 7,1 | 1,49 |
| *Vergleichsbeispiel | | | | | | |

Ein Vergleich der Beispiele 1 und 2 mit den Beispielen 3 und 4 zeigt, dass Polyethercarbonatpolyole, deren Polyethersegmente zu mindestens 75 Gew.-%, bezogen auf das Gesamtgewicht der Polyethersegmente, aus 3 bis 5 Alkylenoxidbaueinheiten bestehen und dessen Polyethersegmente eine Standardabweichung von 1,45 oder weniger aufweisen (Beispiele 1 und 2), eine geringere Viskosität besitzen und die enthaltenen OH-Gruppen eine höhere Reaktivität (kürzere Zeit bis zum Gel-Punkt) aufweisen, als Polyethercarbonatpolyole deren Polyethersegmente zu weniger als 75 Gew.-%, bezogen auf das Gesamtgewicht der Polyethersegmente, aus 3 bis 5 Alkylenoxidbaueinheiten bestehen und dessen Polyethersegmente eine Standardabweichung von mehr als 1,45 besitzen (Vergleichsbeispiele 3 und 4).

## Patentansprüche

1. Polyethercarbonatpolyol, **dadurch gekennzeichnet, dass** mindestens 75 Gew.-% der Polyethersegmente des Polyethercarbonatpolyols, bezogen auf das Gesamtgewicht der Polyethersegmente, aus 3 bis 5 Alkylenoxidbaueinheiten bestehen und die Standardabweichung $\sigma$ der Polyethersegmente im Polyethercarbonatpolyol 1,45 oder weniger beträgt.

2. Polyethercarbonatpolyol gemäß Anspruch 1, **dadurch gekennzeichnet, dass** die Standardabweichung $\sigma$ der Polyethersegmente im Polyethercarbonatpolyol 1,00 bis 1,42 beträgt.

3. Polyethercarbonatpolyol gemäß Anspruch 1 oder 2, **dadurch gekennzeichnet, dass** das Polyethercarbonatpolyol ein zahlenmittleres Molekulargewicht $M_n$ von mindestens 800 g/mol, bevorzugt 1000 bis 20000 g/mol, besonders bevorzugt 1500 bis 6000 g/mol aufweist.

4. Polyethercarbonatpolyol gemäß einem der Ansprüche 1 bis 3, **dadurch gekennzeichnet, dass** das Polyethercarbonatpolyol durch Anlagerung von Alkylenoxid und Kohlendioxid an eine H-funktionelle Startersubstanz in Gegenwart eines DMC-Katalysators hergestellt wird.

5. Polyethercarbonatpolyol gemäß Anspruch 4, **dadurch gekennzeichnet, dass** das Polyethercarbonatpolyol hergestellt wird durch ein Verfahren umfassend die Schritte:

   ($\alpha$) die H-funktionelle Startersubstanz oder ein Gemisch aus mindestens zwei H-funktionellen Startersubstanzen oder ein Suspensionsmittel vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Startersubstanz oder dem Gemisch von mindestens zwei H-funktionellen Startersubstanzen oder dem Suspensionsmittel vor oder nach der Trocknung zugesetzt wird,
   ($\beta$) zur Aktivierung des DMC-Katalysators eine Teilmenge (bezogen auf die Gesamtmenge der bei der Aktivierung und Copolymerisation eingesetzten Menge an Alkylenoxiden) von Alkylenoxid zu der aus Schritt ($\alpha$) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt ($\beta$) zur Aktivierung auch mehrfach erfolgen kann,
   ($\gamma$) Alkylenoxid, Kohlendioxid und gegebenenfalls eine H-funktionelle Startersubstanz kontinuierlich zu einem Reaktor enthaltend die aus Schritt ($\beta$) resultierende Mischung zugesetzt werden, wobei wenigstens in einem der Schritte ($\alpha$) oder ($\gamma$) mindestens eine H-funktionelle Startersubstanz eingesetzt wird und

   wobei in Schritt ($\gamma$) gebildete Reaktionsprodukte aus dem Reaktor kontinuierlich entnommen werden.

6. Polyethercarbonatpolyol gemäß einem der Ansprüche 4 oder 5, **dadurch gekennzeichnet, dass** das Alkylenoxid ausgewählt ist aus der Gruppe bestehend aus Propylenoxid, Ethylenoxid und Mischungen aus Propylenoxid und Ethylenoxid.

7. Polyethercarbonatpolyol gemäß einem der Ansprüche 5 oder 6, **dadurch gekennzeichnet, dass** der Reaktor enthaltend die erste Reaktionsmischung in Schritt ($\gamma$) ein rückvermischter Reaktor ist.

8. Polyethercarbonatpolyol gemäß einem der Ansprüche 4 bis 7, **dadurch gekennzeichnet, dass** als H-funktionelle Startersubstanz mindestens eine Verbindung ausgewählt aus der Gruppe enthaltend Alkohole, Amine, Thiole, Aminoalkohole, Thioalkohole, Hydroxyester, Polyetherpolyole, Polyesterpolyole, Polyesteretherpolyole, Polycarbonatpolyole, Polyethercarbonatpolyole, Polyethylenimine, Polyetheramine Polytetrahydrofurane, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren und $C_1$-$C_{24}$ Alkyl-Fettsäureester, die im Mittel mindestens 2 OH-Gruppen pro Molekül enthalten, eingesetzt wird.

9. Polyethercarbonatpolyol gemäß einem der Ansprüche 4 bis 8, **dadurch gekennzeichnet, dass** das Polyethercarbonatpolyol bei einer Verweilzeit von 1,8 bis 5,0 Stunden hergestellt wird.

10. Verwendung von Polyethercarbonatpolyolen gemäß einem der Ansprüche 1 bis 9 in Wasch- und Reinigungsmittelformulierungen, Bohrflüssigkeiten, Kraftstoffadditiven, ionischen und nichtionischen Tensiden, Schmiermitteln,

Prozesschemikalien für die Papier- oder Textilherstellung oder kosmetischen Formulierungen.

**11.** Polyurethanpolymere, erhalten aus der Reaktion von Polyisocyanaten mit Polyethercarbonatpolyolen gemäß einem der Ansprüche 1 bis 9.

Europäisches Patentamt
European Patent Office
Office européen des brevets

# EUROPÄISCHER RECHERCHENBERICHT

Nummer der Anmeldung
EP 19 18 6090

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 023 447 A1 (COVESTRO DEUTSCHLAND AG [DE]) 25. Mai 2016 (2016-05-25)<br>* Absatz [0001] - Absatz [0110]; Ansprüche 1-15; Beispiele *<br>----- | 1-11 | INV.<br>C08G65/26<br>C08G18/00<br>C08G64/18<br>C08G64/34 |
| X | EP 3 336 130 A1 (COVESTRO DEUTSCHLAND AG [DE]) 20. Juni 2018 (2018-06-20)<br>* Absatz [0001] - Absatz [0117]; Ansprüche 1-15; Beispiele *<br>----- | 1-11 | |
| X | EP 2 548 907 A1 (BAYER MATERIALSCIENCE AG [DE]) 23. Januar 2013 (2013-01-23)<br>* Absatz [0001] - Absatz [0061]; Ansprüche 1-15; Beispiele *<br>----- | 1-11 | |
| X | WO 2008/092767 A1 (BASF SE [DE]; MIJOLOVIC DARIJO [DE] ET AL.)<br>7. August 2008 (2008-08-07)<br>* Seite 1, Zeile 3 - Seite 26, Zeile 35; Ansprüche 1-23; Beispiele *<br>----- | 1-11 | |
| | | | RECHERCHIERTE SACHGEBIETE (IPC) |
| X | EP 2 845 872 A1 (BAYER MATERIALSCIENCE AG [DE]) 11. März 2015 (2015-03-11)<br>* Absatz [0001] - Absatz [0113]; Ansprüche 1-15; Beispiele *<br>----- | 1-11 | C08G<br>C09J |

1

Der vorliegende Recherchenbericht wurde für alle Patentansprüche erstellt

| Recherchenort | Abschlußdatum der Recherche | Prüfer |
|---|---|---|
| Den Haag | 21. November 2019 | Kiebooms, Rafaël |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 19 18 6090

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-11-2019

| Im Recherchenbericht angeführtes Patentdokument | Datum der Veröffentlichung | Mitglied(er) der Patentfamilie | Datum der Veröffentlichung |
|---|---|---|---|
| EP 3023447 A1 | 25-05-2016 | CN 107108878 A | 29-08-2017 |
| | | EP 3023447 A1 | 25-05-2016 |
| | | EP 3221383 A1 | 27-09-2017 |
| | | US 2017321005 A1 | 09-11-2017 |
| | | WO 2016079065 A1 | 26-05-2016 |
| EP 3336130 A1 | 20-06-2018 | CN 110072913 A | 30-07-2019 |
| | | EP 3336130 A1 | 20-06-2018 |
| | | EP 3555175 A1 | 23-10-2019 |
| | | WO 2018114837 A1 | 28-06-2018 |
| EP 2548907 A1 | 23-01-2013 | BR 112014001300 A2 | 18-04-2017 |
| | | CA 2841995 A1 | 24-01-2013 |
| | | CN 103797046 A | 14-05-2014 |
| | | EP 2548907 A1 | 23-01-2013 |
| | | EP 2734569 A1 | 28-05-2014 |
| | | ES 2582281 T3 | 12-09-2016 |
| | | JP 6140698 B2 | 31-05-2017 |
| | | JP 2014520940 A | 25-08-2014 |
| | | KR 20140053197 A | 07-05-2014 |
| | | US 2014155559 A1 | 05-06-2014 |
| | | WO 2013011015 A1 | 24-01-2013 |
| WO 2008092767 A1 | 07-08-2008 | AT 493457 T | 15-01-2011 |
| | | CN 101611074 A | 23-12-2009 |
| | | EP 2115032 A1 | 11-11-2009 |
| | | ES 2358861 T3 | 16-05-2011 |
| | | JP 5512283 B2 | 04-06-2014 |
| | | JP 2010516796 A | 20-05-2010 |
| | | KR 20090107555 A | 13-10-2009 |
| | | PT 2115032 E | 01-02-2011 |
| | | US 2010048935 A1 | 25-02-2010 |
| | | WO 2008092767 A1 | 07-08-2008 |
| EP 2845872 A1 | 11-03-2015 | CN 105683246 A | 15-06-2016 |
| | | EP 2845872 A1 | 11-03-2015 |
| | | EP 3041882 A1 | 13-07-2016 |
| | | SG 11201601575X A | 28-04-2016 |
| | | US 2016185903 A1 | 30-06-2016 |
| | | WO 2015032717 A1 | 12-03-2015 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2015032720 A1
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A
- US 7304172 B2
- US 20120165549 A1


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220
- **V. POKHARKAR ; S. SIVARAM.** *Polymer,* 1995, vol. 36, 4851-4854
- **M. H. CHISHOLM et al.** *Macromolecules,* 2002, vol. 35, 6494
- **S. D. ALLEN.** *J. Am. Chem. Soc.,* 2002, vol. 124, 14284